# EUROPEAN PATENT SPECIFICATION

(11) **EP 3 710 320 B1**
(45) Date of publication and mention of the grant of the patent: **06.05.2026**
(21) Application number: 18803910.1
(22) Date of filing: 09.11.2018
(51) Int. Cl.: B60T 8/17, B60L 7/24, B62J 27/00, B62L 3/00, A41D 13/00

(54) **APPARATUS AND METHOD FOR CONTROLLING A VEHICLE**
VORRICHTUNG UND VERFAHREN ZUR STEUERUNG EINES FAHRZEUGS
APPAREIL ET PROCÉDÉ DE COMMANDE DE VÉHICULE

(30) Priority: 17.11.2017 GB 201719055
(43) Date of publication of application: 23.09.2020
(73) Proprietor: Jaguar Land Rover Limited, Coventry, Warwickshire CV3 4LF (GB)
(72) Inventor: TRUMAN, Mark, Coventry Warwickshire CV3 4LF (GB)
(74) Representative: Jaguar Land Rover Patents Department
(86) International application number: PCT/EP2018/080734
(87) International publication number: WO 2019/096683

(56) References cited:
- JP-A- 2007 062 602
- JP-A- 2016 068 769
- KR-A- 20150 078 632
- US-A1- 2011 233 994
- US-A1- 2015 274 019
- US-A1- 2017 327 109

## Description

### TECHNICAL FIELD

The present disclosure relates to a motorcycle, to a method and to computer software.

### BACKGROUND

It is known to provide electric vehicles with an electric machine associated with at least one wheel of the electric vehicle, which may provide propulsion torque, when desired, to the wheel. The electric machine may also operate in a regeneration mode where electrical energy is generated responsive to rotation of the motor caused by the wheel, such as when the vehicle is decelerating. In the regeneration mode the electric machine applies a regenerative braking torque to the wheel. Where the electric vehicle is a motorcycle having less than four wheels, such as a two-wheeled motorcycle, regenerative braking torque may be observed i.e. felt by a rider of the motorcycle. Particularly, although not exclusively, if the electric machine is associated with a front wheel of the motorcycle, the regenerative braking torque may appear unconventional to riders of rear-wheel driven motorcycles which only demonstrate a noticeable reductive torque through engine braking of the rear wheel.

For further information related to a regenerative brake control system for an electric motorcycle, the reader is directed to United States patent publication number US-A1-2015/0274019, which describes a control unit which supresses a regenerative braking amount more when it is detected that the electric motorcycle is turning than when it is detected that the electric motorcycle is not turning.

It is an object of embodiments of the invention to at least mitigate one or more of the problems of the prior art.

### SUMMARY OF THE INVENTION

Aspects and embodiments of the invention provide a motorcycle, a method and computer software as claimed in the appended claims.

According to an aspect of the present invention, there is provided a motorcycle comprising an electric machine associated with at least one wheel of the motorcycle, wherein said electric machine is operable in a regeneration mode to apply a regenerative braking force to the at least one wheel according to a regeneration control signal, imaging means arranged to output image data corresponding, in use, to at least a portion of a rider of the motorcycle; posture determining means arranged to receive the image data and to determine a posture of a rider of the motorcycle in dependence thereon; and a regeneration control means arranged to determine a vehicle state of the motorcycle and determine the regeneration control signal in dependence on the determined posture of the rider of the motorcycle and the vehicle state, wherein the vehicle state comprises a state of a brake control indicative of a magnitude of rider-requested braking torque; wherein the regeneration control means is arranged to determine the regeneration control signal indicative of a proportion of the rider-requested braking torque as regenerative braking torque. The regenerative braking force may be dynamically determined in dependence on the posture of the rider of the motorcycle.

Advantageously the regeneration control signal may account for the vehicle state.

Advantageously operation of the brake control may be taken into account when determining the regeneration braking torque.

Advantageously the magnitude of regenerative braking torque may be proportional to the magnitude of rider-requested braking torque. Advantageously the regenerative braking torque may form part of the rider-requested braking torque.

The posture determining means may be communicably couplable with a one or more sensors associated with motorcycle clothing worn by the rider of the motorcycle, the one or more sensors being arranged to, in use, determine the posture of the rider of the motorcycle.

According to an aspect of the present invention, there is provided a method, comprising: generating image data corresponding to at least a portion of a rider of the motorcycle (100); determining a posture of a rider of a motorcycle in dependence on the image data; determining a vehicle state of the motorcycle; determining a regeneration control signal in dependence on the determined posture of the rider of the motorcycle and the vehicle state; wherein the vehicle state comprises a state of a brake control indicative of a magnitude of rider-requested braking torque; determining the regenerative control signal (185) indicative of a proportion of the rider-requested braking torque as regenerative braking torque; and applying a regenerative braking torque to at least one wheel of the motorcycle in dependence on the regeneration control signal.

The method optionally comprises receiving a signal from one or more sensors associated with motorcycle clothing worn by the rider of the motorcycle, the signal being indicative of the posture of the rider of the motorcycle.

The posture may comprise one or more of an inclination of at least a portion of a torso of the rider of the motorcycle, an extension of at least one arm or leg of the rider of the motorcycle, and a lean angle of the rider of the motorcycle about a longitudinal axis of the motorcycle. Advantageously the configuration of said body parts may be indicative of the posture of the rider.

The imaging means may comprise one or more imaging devices arranged to, in use, view the at least a portion of the rider of the motorcycle. Advantageously the wireless reception is convenient for the rider. Advantageously the posture determining means may determine the rider's posture based on the posture signal.

The posture determining means may comprise an image recognition means arranged to recognise the posture of the rider of the motorcycle as one of a plurality of predetermined postures. Advantageously the posture of the rider may be determined and a signal indicative thereof provided to the posture determining means.

The regeneration control means may be arranged to select a control map for the electric machine in dependence on the determined posture of the rider of the motorcycle. Advantageously the control map may be used to determine the regeneration torque.

The regeneration control signal is, optionally, indicative of the regenerative braking torque applied to the at least one wheel of the motorcycle by the electric machine in the regeneration mode. Advantageously the control signal may be used to control the regenerative braking torque.

The regeneration control means may be arranged to determine the regeneration control signal indicative of a relatively lower regenerative braking torque when said posture of the rider of the motorcycle is indicative of an upper torso of the rider of the motorcycle being generally parallel to the motorcycle. Advantageously less regenerative braking torque is applied when said rider is in a lower, sportier, aerodynamic position on the motorcycle.

The regeneration control means may be arranged to determine the regeneration control signal indicative of a relatively greater regenerative braking torque when said posture of the rider of the motorcycle is indicative of an upper torso of the rider of the motorcycle being generally perpendicular to the motorcycle. Advantageously greater regenerative braking torque may be applied when the rider is braced suitable for the application of regenerative braking torque.

The vehicle state may be indicative of one or more controls operated by the rider of the motorcycle. Advantageously the operation of the control(s) of the motorcycle may influence the regenerative braking torque.

The regeneration control signal may be indicative of the proportion of the rider-requested braking torque as regenerative braking torque to friction-based braking torque. Advantageously the rider-requested braking torque may be formed by the regenerative braking torque and the friction-based braking torque. Advantageously the relative composition of regenerative braking torque and the friction-based braking torque may be controlled according to the posture of the rider.

The vehicle state may comprise one or more of a speed of the motorcycle, a lean angle of the motorcycle, an accelerator rider input. Advantageously other conditions of the motorcycle may influence the level of regenerative braking torque.

The electric machine is optionally associated with a front wheel of the motorcycle. Advantageously control of regenerative braking torque applied to the front wheel, which may be sensed more by the rider, is provided.

The motorcycle optionally comprises a power storage means, wherein the electric machine is arranged to output an electric current to recharge the power storage means in the regeneration mode. Advantageously the power storage means is charged during use of the motorcycle.

The posture according to the invention, comprises one or more of an inclination of at least a portion of a torso of the rider of the motorcycle, an extension of at least one arm of the rider of the motorcycle, and a lean of the rider of the motorcycle about a longitudinal axis of the motorcycle.

The method may comprise recognising, in dependence on the image data, the posture of the rider of the motorcycle as one of a plurality of predetermined postures. The the image data is generated by one or more imaging devices arranged to, in use, view the at least a portion of the rider of the motorcycle.

The method may comprise receiving an indication of a determined posture of the rider of the motorcycle.

The method may comprise receiving a control map for the electric machine, wherein the control map is associated with a determined posture of the rider of the motorcycle.

The regeneration control signal is optionally determined to be indicative of a relatively lower regenerative braking torque when said posture of the rider of the motorcycle is indicative of an upper torso of the rider of the motorcycle being generally parallel to the motorcycle.

The regeneration control signal is optionally determined to be indicative of a relatively greater regenerative braking torque when said posture of the rider of the motorcycle is indicative of an upper torso of the rider of the motorcycle being generally perpendicular to the motorcycle. The vehicle state may be indicative of one or more controls operated by the rider of the motorcycle.

Determining the vehicle state optionally comprises one or more of determining a speed of the motorcycle, determining a lean angle of the motorcycle, determining an accelerator rider input, and determining a brake rider input.

Optionally the method comprises determining the regeneration control signal indicative of the proportion of the rider-requested braking torque as regenerative braking torque to friction-based braking torque.

According to an aspect of the present invention, there is provided computer software which, when executed by a computer, is arranged to perform a method according to an aspect of the invention. The computer software may be stored on a computer-readable medium. The computer software may be tangibly stored on the computer readable medium. The computer-readable medium may be non-transitory.

### BRIEF DESCRIPTION OF THE DRAWINGS

One or more embodiments of the invention will now be described by way of example only, with reference to the accompanying drawings, in which:
Figure 1 shows a vehicle according to an embodiment of the invention;
Figure 2 shows a system according to an embodiment of the invention;
Figure 3 shows a method according to an embodiment of the invention; and
Figure 4 shows an illustration of posture of a motorcycle rider according to an embodiment of the invention.

### DETAILED DESCRIPTION

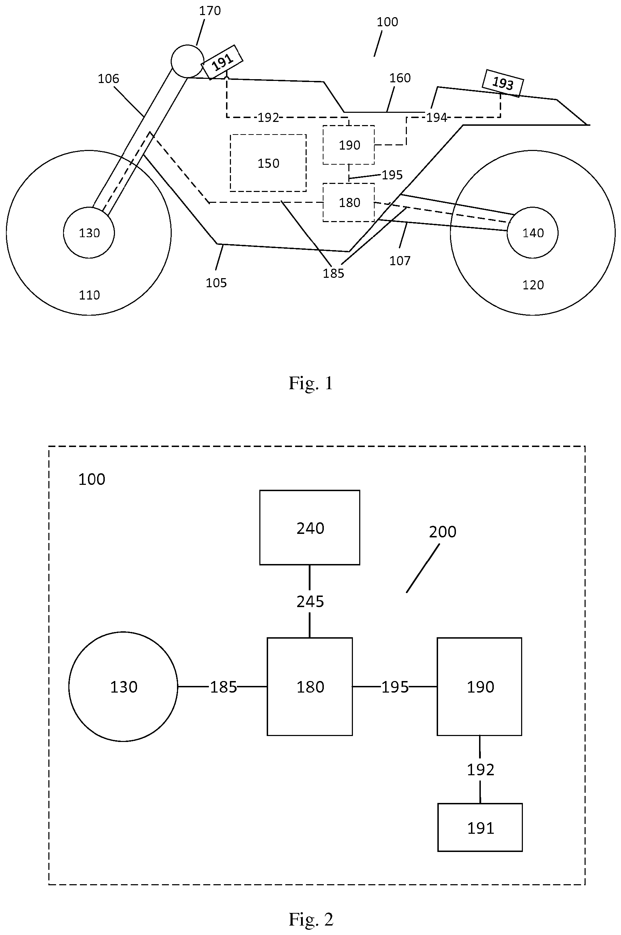

Figure 1 shows a vehicle 100 according to an embodiment of the invention. The vehicle 100 is an electric vehicle 100 which comprises a power storage means 150 for storing electrical energy therein for, at least partially, propelling the vehicle 100. In the embodiment illustrated in Figure 1 the vehicle 100 is a two-wheeled 110, 120 vehicle 100 comprising a first wheel 110 and a second wheel 120. The two wheels 110, 120 are arranged in alignment along a longitudinal axis of the vehicle 100, such that the first wheel 110 is forward of the second wheel 120. The vehicle 100 may be a motorcycle 100. The first wheel 110 of the motorcycle is used for steering of the motorcycle. Other embodiments of motorcycle 100 may be envisaged such as a tricycle comprising two wheels separated in a transverse axis of the vehicle 100.

The motorcycle 100 comprises at least one electric machine 130, 140 associated with at least one of the wheels 110, 120 of the motorcycle 100. The motorcycle 100 illustrated in Figure 1 comprises two electric machines 130, 140 each associated with a respective wheel 110, 120 of the motorcycle 100. A first electric machine 130 is associated with the first, forward, wheel 110 of the motorcycle 100. A second electric machine 140 is associated with the second, rear, wheel 120 of the motorcycle 100. One or both of the electric machines 130, 140 may be used to provide propulsion or driving torque to the respective wheel 110, 120 of the motorcycle 100. The propulsion torque may be applied responsive to an input received from a rider of the motorcycle, which may be provided via an accelerator control, such as attached to a handlebar 170 of the motorcycle 100. One or more signals indicative of the rider's input applied to one or more controls of the motorcycle 100, such as the accelerator control, are received by a motor control unit 180 of the motorcycle 100. The motor control unit 180 may comprise one or more motor control maps stored therein, such as in a memory of the motor control unit 180, which enable the motor control unit 180 to, in use, determine an amount of propulsion torque to be applied by one or both of the electric machines 130, 140 corresponding to the input applied to the one or more controls of the motorcycle 100. The motor control unit 180 operatively outputs at least one motor control signal 185 to the first and second electric machines 130, 140 wherein the motor control signal 185 is indicative of the respective propulsion torque to be applied by each electric machine 130, 140 in a propulsion mode. The motor control unit 180 may comprise one or more processing devices which operatively execute computer-readable instructions to determine the motor control signal 185. The motor control unit 180 may receive one or more additional inputs indicative of a state of the motorcycle 100 to determine the motor control signal 185. The one or more inputs may comprise inputs indicative of a lean angle of the motorcycle 100 or a speed of one or more of the wheels 110, 120 of the motorcycle.

Further description of embodiments of the present invention will be made with reference to the first wheel 110 of the motorcycle, although it will be appreciated that embodiments of the invention may be applied with respect to the second, or other, wheel of the motorcycle 100.

The motorcycle comprises a body 105, such as formed by bodywork attached to a frame (not shown), from which the wheels 110, 120 are suspended via one or more intermediate components such as forks 106 and a swing-arm 107 of the motorcycle 100. In some embodiments a front swing-arm replaces the forks 106. The power storage means 150 may be suspended within the body 105 such about the frame of the motorcycle. The power storage means 150 may be formed by one or more batteries or cells which store electrical energy therein and provide electrical energy to the one or more electric machines 130, 140. The power storage means 150 may be recharged by electrical energy provided from the one or more electric machines 130, 140 when the electric machine(s) 130, 140 are operative in a regeneration mode, as will be explained.

In one embodiment, the first electric machine 130 associated with the first wheel 110 may be selectively operated in the regeneration mode to generate electrical energy which is stored in the power storage means 150. When said electric machine 130 is operated in the regeneration mode, the first electric machine 130 applies a regenerative braking torque to the first wheel 110. The regenerative braking torque applied by the first electric machine 130 is generated by the first electric machine 130 in dependence on the motor control signal 185 provided to the first electric machine 130 by the motor control unit 180. The motor control signal 185 comprises a regeneration control signal 185 which is indicative of a magnitude of the regenerative braking torque applied to the first wheel 110 by the electric machine 130 in the regeneration mode. The regeneration control signal 185 may be determined by the motor control unit 180 in dependence on the one or more motor control maps stored therein.

However a requirement for the rider to set, during use of the motorcycle 100, the magnitude of the regenerative braking torque may be onerous for the rider of the motorcycle 100. For example, the rider of the motorcycle 100 may wish to have different levels of regenerative braking torque applied at different times during riding, even differing between individual corners. It will be appreciated that the motorcycle 100 may comprise a friction-based braking system for applying a further, or alternative, friction-based braking torque to the motorcycle 100, which may be applied via a hydraulic braking system of the motorcycle. In some embodiments, the friction-based braking system includes one or more abrasive members, such as brake pads or shoes, which are operatively brought into contact with a disk or drum associated with at least one wheel of the motorcycle. The friction-based braking torque may be applied in dependence on an input provided to one or more braking controls of the motorcycle such as arranged upon the handlebars 170 and proximal to a footrest or footpeg of the motorcycle 100. Further, an overrun braking torque may also be experienced due to, for example, friction losses or drive losses, such as between the electric machine 130 and first wheel 110.

In some embodiments, regenerative braking torque and friction-based braking torque are applied to at least one wheel of the motorcycle to provide a total rider-controlled braking torque by which the rider may intentionally control deceleration of the motorcycle. A total magnitude of the rider-controlled braking torque may be determined by the rider operating the one or more braking controls of the motorcycle 100. In some embodiments, a relative proportion of the regenerative braking torque to the friction-based braking torque may be controlled by the motor control unit 180, as indicated by the regeneration control signal 185 provided to the first electric machine 130. The proportion of the regenerative braking torque to the friction-based braking torque may be controlled by the motor control unit 180 to provide a natural riding experience for the rider of the motorcycle 100, as will be explained.

The motorcycle 100 further comprises posture determining means (PDM) 190. The posture determining means may be provided in the form of a posture determining unit 190. The PDM 190 may comprise at least one processing device for executing computer readable instructions which may be stored in a memory thereof.

The PDM 190 is arranged to receive image data from imaging means 191, 193, and to provide one or more signals 195 to the motor control unit 180 of the motorcycle 100. In some embodiments, the PDM 190 may provide a signal 195 indicative of a selection of a motor control map to the motor control unit 180. In other embodiments, the PDM 190 may provide a motor control map to the motor control unit 180. The motor control map may be indicative of the magnitude of the regenerative braking torque relative to one or more input variables, as will be explained.

The imaging means 191, 193 may be one or more imaging devices 191, 193. The imaging devices 191, 193 may be cameras, such as comprising a CCD, or the like. The imaging devices 191, 193 are arranged to output image data 192, 194 corresponding, in use, to at least a portion of a rider of the motorcycle 100. That is, when the rider is aboard the motorcycle i.e. in a position for riding the motorcycle, at least some of the imaging devices 191, 193 are arranged to generate image data of at least part of the rider's body. As shown in Figure 1, the motorcycle 100 may comprise a plurality of imaging devices 191, 193 although it will be appreciated that embodiments may be envisaged with only one imaging device 191, 193. The plurality of imaging devices may be distributed about the motorcycle 100 to each generate image data of a respective portion of the rider. The respective portions may be different portions of the rider's body.

An imaging device, a first imaging device 191 in the embodiment of Figure 1, may be arranged to generate image data corresponding to a forward view of the rider, particularly an upper torso of the rider. The forward view of the rider may include the rider's head. The first imaging device 191 may be arranged in a headstock region of the motorcycle 100. The first imaging device 191 may be arranged to view rearward i.e. towards a tail of the motorcycle 100. The first imaging device 191 may be located adjacent or within an instrument panel or cluster of the motorcycle 100. The first imaging device 191 is arranged to generate first image data 192. The first image data 192 is output from the first imaging device 191 and is provided to the PDM 190.

In some embodiments, an imaging device 193, a second imaging device 193 in the embodiment of Figure 1, may be arranged to generate image data corresponding to a rear view of at least a portion of the rider of the motorcycle 100. The second imaging device 193 may be located towards a rear of the motorcycle 100. The second imaging device 193 may be arranged to generate image data corresponding to a forward view. In one embodiment, the second imaging device 193 may be located about the tail of the motorcycle 100. The second imaging device 193 is arranged to generate image data corresponding generally to the back of the rider, which may also include a rear view of the rider's head. The second imaging device 193 is arranged to generate second image data 194. The second image data 194 is output from the second imaging device 193 and is provided to the PDM 190.

It will be appreciated that embodiments of the invention are not restricted to the above-described locations and arrangements of imaging devices 191, 193. Other (additional or alternative) locations for imaging devices may be envisaged, such as alongside one or both sides of the motorcycle 100.

Figure 2 is a schematic illustration of a system 300 according to an embodiment of the invention. The system 200 comprises the PDM 190 which is arranged to determine the posture of the rider of the motorcycle 100. The posture is determined by the PDM 190 in dependence on the image data generated by the one or more imaging devices 191, 193 (only one of which is shown in Figure 2) associated with the motorcycle 100.

The PDM 190 is arranged to determine the posture of the rider of the motorcycle 100 based on received image data 192, 194. The PDM 190 is arranged to process the received image data 192, 194 to determine the rider's posture. The PDM 190 may apply one or more image recognition techniques to determine the rider's posture. The PDM 190 may operatively determine which of a plurality of reference postures, as depicted in the image data 192, 194, most closely resembles the rider's posture.

The posture of the rider of the motorcycle 100 may be determined by the PDM 190 as will be explained further with reference to Figure 5. The posture may be determined as one of a plurality of predetermined postures or one of a plurality of posture groupings. A posture grouping may be a group of postures having at least one posture attribute in common. For example, posture signals indicative of the rider's back being bent, i.e. beyond a threshold, may be used to determine that the posture of the rider belongs to a posture grouping having a bent back, such as a "hunkered down" or "sporty" posture, it being appreciated that other posture groupings may be envisaged.

The PDM 190 may receive the image data 192 and, in one embodiment, select one of the plurality of predetermined postures or posture groupings which most closely resembles, i.e. is the best fit to, the posture of the rider as depicted in the image data 192.

The PDM 190 is arranged to output a posture signal 195 indicative of the determined posture in some embodiments. As noted above, the posture signal 195 may be indicative of a selection of a motor control map to the motor control unit 180. In other embodiments, the PDM 190 posture signal 195 may provide a motor control map to the motor control unit 180.

In some embodiments, although not shown in Figure 2, the motorcycle 100 comprise a rider interface means. The rider interface means may be a device for receiving an input from the rider of the motorcycle 100. The rider interface means may comprise means for outputting information to the rider and for receiving the input in response thereto. The rider input means may be communicably coupled to the PDM 190. The coupling between the PDM 190 and the rider interface means may be indirect, such as via a communication bus of the motorcycle 100. In some embodiments, the PDM 190 is arranged to request an input from the rider of the motorcycle 100 confirming that the rider wishes to have the regenerative braking torque of the motorcycle dynamically determined in dependence on their posture. For example, if the motorcycle 100 is also to be ridden by a pillion, then it may be inappropriate for the posture of the rider to be used to control the regenerative braking torque of the motorcycle, such as because the rider's posture may be influenced by the pillion, or the rider may simply not wish to have the regenerative braking torque determined in dependence on their posture. Therefore, in some embodiments, the regenerative braking torque may only be dynamically determined in dependence on the rider's posture if confirmation is received via the rider input means.

As discussed above, the motor control unit 180 is communicatively coupled to the PDM 190. The motor control unit 180 of the motorcycle 100 is arranged to determine the motor control signal 185 comprising the regeneration control signal 185 in dependence on the determined posture of the rider of the motorcycle 100. The motor control unit 180 is arranged to receive the signal 195 from the PDM 190. As noted above, the regeneration control signal 185 is indicative of the regenerative braking torque applied to the at least one wheel 110 of the motorcycle 100 by the electric machine 130 associated therewith when operative in the regeneration mode.

In some embodiments, the motor control unit 180 is arranged to determine a vehicle state of the motorcycle 100, wherein the regeneration control signal 185 is determined, in part, in dependence on the vehicle state. The vehicle state may be indicative of one or more controls 240 operated by the rider of the motorcycle 100. The one or more controls 240 may comprise one or both of a throttle control of the motorcycle 100 and one or more brake controls of the motorcycle 100 (it being remembered that some motorcycles have independent controls for front and rear brakes). The throttle control may be a twist-grip control mounted about the handlebar 170 of the motorcycle 100. The one or more brake controls may comprise a brake lever attached to the handlebar and/or a foot-operated brake control. One or more signals 245 indicative of the state of the one or more vehicle controls 240 are provided to the motor control unit 180 which may determine the regeneration control signal 185 partly in dependence thereon. For example, the regeneration control signal 185 may be indicative of a greater regenerative braking torque when the brake(s) of the motorcycle 100 are applied than when said brakes are not applied.

The vehicle state may further comprise one or more operating parameters of the motorcycle which may include one or more of a speed of the motorcycle, a lean angle of the motorcycle i.e. with respect to the ground, and a state of charge of the power storage means 150. It will be appreciated that the vehicle state may comprise other or alternative operating parameters of the motorcycle 100.

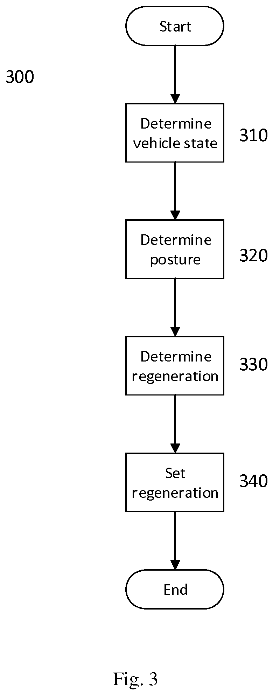

Figure 3 illustrates a method 300 according to an embodiment of the invention. The method 300 may be a method 300 of controlling an electric vehicle according to an embodiment of the invention, such as an electric motorcycle 100 as illustrated in Figures 1 and 2. In particular, the method 300 may determine the regeneration control signal 185 indicative of the regenerative braking torque applied to a wheel of the electric vehicle, as will be explained. The method 300 will be explained with reference to the motorcycle 100 and system 200 described above.

The method 400 comprises an optional step 310 of determining a vehicle state of the motorcycle 100. As noted above, the vehicle state may be indicative of one or more controls 240 operated by the rider of the motorcycle 100 such as one or both of a throttle control of the motorcycle 100 and one or more brake controls of the motorcycle 100. In some embodiments the vehicle state comprises one or more of a speed of the motorcycle, a lean angle of the motorcycle with respect to the ground and a state of charge of the power storage means 150 of the motorcycle 100.

In step 320 of the method 300, a posture of the rider of the motorcycle 100 is determined. The posture may be determined in dependence on the image data 192, 194 output by the one or more imaging devices 191, 193 associated with the motorcycle 100. Step 320 may comprise recognising the posture of the rider based on the image data 191, 193. In some embodiments, the recognising is performed by pattern-matching the position of one or more parts of the rider's body, such as one or more of head, torso, arms and legs of the rider of the motorcycle 100. The pattern-matching may be performed by the PDM 190 with respect to reference data indicative of one or more reference postures which may be adopted by the rider. The posture of the rider depicted in the image data is compared against the reference postures to determine which reference posture has a greatest similarity to a current posture adopted by the rider.

The posture of the rider of the motorcycle 100 is determined in dependence on the image data 192, 194. As noted above, in some embodiments the posture of the rider is selected as one of a plurality of predetermined postures or posture groupings.

The method 300 comprises a step 330 of determining the regeneration control signal 185 in dependence on the determined posture of the rider of the motorcycle 100. In some embodiments, the regeneration control signal 185 may be determined according to a magnitude of the rider-operated braking torque requested by the rider of the motorcycle. The regeneration control signal 185 is indicative of the regenerative braking torque applied to at least one wheel of the motorcycle 100 by the electric machine 130, 140 associated with said wheel, when the electric machine 130, 140 is operative in the regeneration mode. The regeneration control signal 185 is determined in dependence on the posture determined in step 330. In some embodiments, the regeneration control signal 185 is determined, in part, based on the vehicle state determined in step 310, such as a state of the one or more controls 240 of the motorcycle 100 operated by the rider. Thus as a result of step 330 the magnitude of the regenerative braking force to be applied to the at least one wheel of the motorcycle 100 is determined. In some embodiments, step 330 comprises determining the magnitude of the rider-operated braking torque requested by the rider, such as according to a position or operation of the one or more braking controls 240 of the motorcycle 100, and determining a proportion of the total rider-operated braking torque to be provided from regenerative braking torque. That is, step 330 may comprise determining a relative proportion of regenerative braking torque to friction-braking torque to be applied to the one or more wheels of the motorcycle. For example, in some embodiments of step 330, a speed of the motorcycle 100 may be determined and the magnitude of rider-operated braking torque requested by the rider. At slower speeds, a greater proportion of braking torque may be provided as friction-based braking torque than regeneration braking torque, whereas at higher-speeds a greater proportion of the total magnitude may be provided by regenerative braking torque.

The method 300 comprises a step 340 of applying the regenerative braking torque to the at least one wheel of the motorcycle 100 according to the regeneration control signal 185. The regeneration control signal 185 may be provided to the electric machine 130, 140 in order to cause said electric machine 130, 140 to operate in the regeneration mode. When in the regeneration mode, rotation induced in the electric machine 130, 140 is used to generate an electrical current which is used to charge to the power storage means 150, such as the battery, of the motorcycle 100. The regenerative braking torque may be applied in step 340 simultaneously with friction-braking torque applied by one or more brakes of the motorcycle 100.

Thus it can be appreciated that the regenerative braking torque applied to the at least one wheel of the motorcycle 100 by the electric machine is controlled in dependence on the rider's posture on the motorcycle. The regenerative braking torque automatically adapts to the rider's style of riding of the motorcycle in dependence on their riding posture.

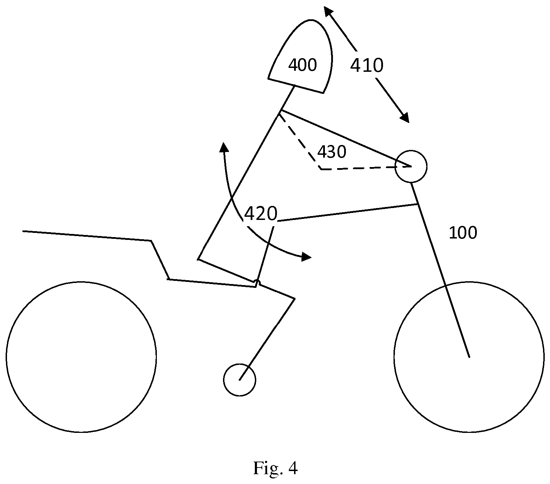

Referring to Figure 4, an illustration of the posture of the rider 400 determined according to an embodiment of the invention is illustrated.

In some embodiments the posture comprises an inclination of at least a portion of a torso of the rider 400 of the motorcycle 100. The inclination may be indicative of a relative angle between the torso of the rider 400 and the motorcycle 100. In some embodiments it is determined when said posture of the rider of the motorcycle is indicative of an upper torso of the rider of the motorcycle being generally parallel to the motorcycle 100. In such posture, the regeneration control signal 185 may be determined to indicative of a relatively lower regenerative braking torque so as not to affect handling of the motorcycle 100. In this posture, it is expected that the rider is expecting to ride or turn the motorcycle 100 at higher speeds and thus desires less regenerative braking torque to be applied. Conversely the regeneration control signal 185 may be determined to be indicative of a relatively greater or higher regenerative braking torque when the posture of the rider 400 of the motorcycle is indicative of an upper torso of the rider 400 being generally perpendicular to the motorcycle 100, as indicated by arrow 410.

The posture may comprise an extension of at least one arm or leg of the rider of the motorcycle. When the arm is extended in a generally linear manner, the regeneration control signal 185 may be determined to be indicative of a relatively greater or higher regenerative braking torque as the rider's posture allows greater bracing of the rider 400 against deceleration of the motorcycle 100.

In some embodiments the posture comprises a lean or rotation of the rider 400 of the motorcycle 100 about a longitudinal axis of the motorcycle 100. In other words, whether the rider 100 is rotated alongside the side of the motorcycle 100, as indicated by arrow 420. When so rotated 420 from a position generally on top of the motorcycle 100 to at least partially alongside of the motorcycle 100, the motor control unit 180 may apply relatively lower regenerative braking torque so as not to affect handling of the motorcycle 100

It can be appreciated that embodiments of the invention control the regenerative braking torque arising from regeneration without the rider of the motorcycle 100 being required to provide an input, which advantageously allows greater rider concentration of other matters, which may improve safety.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same. The invention scope is defined by the claims.

## Claims

1. A motorcycle (100), comprising:
an electric machine (130; 140) associated with at least one wheel (110; 120) of the motorcycle, wherein said electric machine (130; 140) is operable in a regeneration mode to apply a regenerative braking torque to the at least one wheel according to a regeneration control signal (185);
imaging means (191; 193) arranged to output image data (192; 194) corresponding, in use, to at least a portion of a rider of the motorcycle;
posture determining means (190) arranged to receive the image data (192; 194) and to determine a posture of a rider of the motorcycle in dependence thereon; and
regeneration control means arranged to determine a vehicle state of the motorcycle (100) and determine the regeneration control signal (185) in dependence on the determined posture of the rider of the motorcycle and the vehicle state, wherein the vehicle state comprises a state of a brake control indicative of a magnitude of rider-requested braking torque;
wherein the regeneration control means is arranged to determine the regeneration control signal (185) indicative of a proportion of the rider-requested braking torque as regenerative braking torque; and
wherein the posture comprises one or more of:
an inclination of at least a portion of a torso of the rider of the motorcycle;
an extension of at least one arm or leg of the rider of the motorcycle; and
a lean angle of the rider of the motorcycle about a longitudinal axis of the motorcycle (100).

2. The motorcycle of claim 1 wherein the imaging means (191;193) comprises one or more imaging devices arranged to, in use, view the at least a portion of the rider of the motorcycle.

3. The motorcycle of claim 1, or 2, wherein the posture determining means (190) comprises an image recognition means arranged to recognise the posture of the rider of the motorcycle as one of a plurality of predetermined postures.

4. The motorcycle of any preceding claim, wherein the regeneration control means is arranged to select a control map for the electric machine in dependence on the determined posture of the rider of the motorcycle (100).

5. The motorcycle of any preceding claim, wherein the regeneration control signal (185) is indicative of the regenerative braking torque applied to the at least one wheel (110; 120) of the motorcycle by the electric machine (130; 140) in the regeneration mode.

6. The motorcycle of any preceding claim, wherein the regeneration control means is arranged to determine the regeneration control signal (185) indicative of a relatively lower regenerative braking torque when said posture of the rider of the motorcycle is indicative of an upper torso of the rider of the motorcycle being generally parallel to the motorcycle.

7. The motorcycle of any preceding claim, wherein the regeneration control means is arranged to determine the regeneration control signal (185) indicative of a relatively greater regenerative braking torque when said posture of the rider of the motorcycle (100) is indicative of an upper torso of the rider of the motorcycle being generally perpendicular to the motorcycle.

8. The motorcycle of any preceding claim, wherein the vehicle state is indicative of one or more controls operated by the rider of the motorcycle (100).

9. The motorcycle of any preceding claim, wherein the regeneration control signal is indicative of the proportion of the rider-requested braking torque as regenerative braking torque to friction-based braking torque.

10. The motorcycle of any preceding claim, wherein the vehicle state comprises one or more of:
a speed of the motorcycle (100);
a lean angle of the motorcycle (100); and
an accelerator rider input.

11. The motorcycle of any preceding claim, wherein the electric machine (130) is associated with a front wheel (110) of the motorcycle.

12. The motorcycle of any preceding claim, comprising a power storage means (150), wherein the electric machine (130; 140) is arranged to output an electric current to recharge the power storage means (150) in the regeneration mode.

13. A method, comprising:
generating image data corresponding to at least a portion of a rider of the motorcycle (100);
determining a posture of a rider of a motorcycle in dependence on the image data (192; 194);
determining a vehicle state of the motorcycle (100);
determining a regeneration control signal (185) in dependence on:
the posture of the rider of the motorcycle; and
the vehicle state, wherein the vehicle state comprises determining a brake rider input that is indicative of a magnitude of rider-requested braking torque; and,
determining the regenerative control signal (185) indicative of a proportion of the rider-requested braking torque as regenerative braking torque;
applying a regenerative braking torque to at least one wheel (110; 120) of the motorcycle in dependence on the regeneration control signal (185), and
wherein the posture comprises one or more of:
an inclination of at least a portion of a torso of the rider of the motorcycle;
an extension of at least one arm of the rider of the motorcycle; and
a lean of the rider of the motorcycle about a longitudinal axis of the motorcycle (100).

14. The method of claim 13 comprising recognising, in dependence on the image data (192; 194), the posture of the rider of the motorcycle as one of a plurality of predetermined postures.

15. The method of claim 13 or 14 wherein the image data (192; 194) is generated by one or more imaging devices (191; 193) arranged to, in use, view the at least a portion of the rider of the motorcycle.

16. The method of any of claims 13 to 15 wherein the regeneration control signal (185) is determined to be indicative of a relatively lower regenerative braking torque when said posture of the rider of the motorcycle is indicative of an upper torso of the rider of the motorcycle being generally parallel to the motorcycle (100).

17. The method of any of claims 13 to 16, wherein the regeneration control signal (185) is determined to be indicative of a relatively greater regenerative braking torque when said posture of the rider of the motorcycle is indicative of an upper torso of the rider of the motorcycle being generally perpendicular to the motorcycle (100).

18. The method of any of claims 13 to 17, wherein the vehicle state is indicative of one or more controls operated by the rider of the motorcycle.

19. The method of any of claims 13 to 18, wherein the method comprises determining the regeneration control signal (185) indicative of the proportion of the rider-requested braking torque as regenerative braking torque to friction-based braking torque.

20. The method of any of claims 13 to 19, wherein determining the vehicle state comprises one or more of:
determining a speed of the motorcycle (100);
determining a lean angle of the motorcycle (100); and
determining an accelerator rider input.

21. Computer software which, comprising instructions which, when executed by a computer, is arranged to perform a method according to any of claims 13 to 20,

22. The computer software of claim 21 stored on a computer-readable medium.

## Patentansprüche

1. Motorrad (100), umfassend:
eine elektrische Maschine (130; 140), die mit mindestens einem Rad (110; 120) des Motorrads verbunden ist, wobei die elektrische Maschine (130; 140) in einem Regenerationsmodus betrieben werden kann, um ein regeneratives Bremsmoment auf das mindestens eine Rad nach einem Regenerationssteuersignal (185) aufzubringen;
Bildgebungsmittel (191; 193), die angeordnet sind, um Bilddaten (192; 194) auszugeben, die bei Verwendung mindestens einem Abschnitt eines Fahrers des Motorrads entsprechen;
Positionsbestimmungsmittel (190), die angeordnet sind, um die Bilddaten (192; 194) zu empfangen und um in Abhängigkeit davon eine Position eines Fahrers des Motorrads zu bestimmen; und
Regenerationssteuermittel, die angeordnet sind, um einen Fahrzeugzustand des Motorrads (100) zu bestimmen und das Regenerationssteuersignal (185) in Abhängigkeit von der bestimmten Körperhaltung des Fahrers des Motorrads und dem Fahrzeugzustand zu bestimmen, wobei der Fahrzeugzustand einen Zustand einer Bremssteuerung umfasst, der eine Größe des vom Fahrer angeforderten Bremsmoments angibt;
wobei die Regenerationssteuermittel eingerichtet sind, um das Regenerationssteuersignal (185) zu bestimmen, das einen Anteil des vom Fahrer angeforderten Bremsmoments als regeneratives Bremsmoment angibt; und
wobei die Körperhaltung eines oder mehreres von Folgendem umfasst:
eine Neigung mindestens eines Abschnitts des Oberkörpers des Fahrers des Motorrads;
eine Verlängerung von mindestens einem Arm oder Bein des Fahrers des Motorrads; und
einen Schräglagenwinkel des Fahrers des Motorrads um eine Längsachse des Motorrads (100).

2. Motorrad nach Anspruch 1, wobei das Bildgebungsmittel (191; 193) eine oder mehrere Bildgebungsvorrichtungen umfasst, die angeordnet sind, um bei der Verwendung mindestens einen Abschnitt des Fahrers des Motorrads zu betrachten.

3. Motorrad nach Anspruch 1 oder 2, wobei das Positionsbestimmungsmittel (190) ein Bilderkennungsmittel umfasst, das angeordnet ist, um die Position des Fahrers des Motorrads als eine aus einer Vielzahl von vorbestimmten Positionen zu erkennen.

4. Motorrad nach einem der vorstehenden Ansprüche, wobei die Regenerationssteuermittel angeordnet sind, um eine Steuerkarte für die elektrische Maschine in Abhängigkeit von der bestimmten Körperhaltung des Fahrers des Motorrads (100) auszuwählen.

5. Motorrad nach einem der vorstehenden Ansprüche, wobei das Regenerationssteuersignal (185) das regenerative Bremsmoment angibt, das von der elektrischen Maschine (130; 140) im Regenerationsmodus auf das mindestens eine Rad (110; 120) des Motorrads aufgebracht wird.

6. Motorrad nach einem der vorstehenden Ansprüche, wobei die Regenerationssteuermittel angeordnet sind, um das Regenerationssteuersignal (185) zu bestimmen, das ein relativ niedrigeres regeneratives Bremsmoment angibt, wenn die Körperhaltung des Motorradfahrers angibt, dass ein Oberkörper des Motorradfahrers im Allgemeinen parallel zum Motorrad ist.

7. Motorrad nach einem der vorstehenden Ansprüche, wobei die Regenerationssteuermittel angeordnet sind, um das Regenerationssteuersignal (185) zu bestimmen, das ein relativ größeres regeneratives Bremsmoment angibt, wenn die Körperhaltung des Fahrers des Motorrads (100) angibt, dass der Oberkörper des Fahrers des Motorrads im Allgemeinen senkrecht zum Motorrad steht.

8. Motorrad nach einem der vorstehenden Ansprüche, wobei der Fahrzeugzustand Angaben zu einem oder mehreren vom Fahrer des Motorrads (100) betätigten Steuerelementen enthält.

9. Motorrad nach einem der vorstehenden Ansprüche, wobei das Regenerationssteuersignal das Verhältnis des vom Fahrer angeforderten Bremsmoments als regeneratives Bremsmoment zum reibungsbasierten Bremsmoment angibt.

10. Motorrad nach einem der vorstehenden Ansprüche, wobei der Fahrzeugzustand eines oder mehrere von Folgendem umfasst:
eine Geschwindigkeit des Motorrads (100);
einen Schräglagenwinkel des Motorrads (100); und
eine Beschleunigerfahrereingabe.

11. Motorrad nach einem der vorstehenden Ansprüche, wobei die elektrische Maschine (130) mit einem Vorderrad (110) des Motorrads verbunden ist.

12. Motorrad nach einem der vorstehenden Ansprüche, umfassend ein Energiespeichermittel (150), wobei die elektrische Maschine (130; 140) angeordnet ist, um einen elektrischen Strom auszugeben, um das Energiespeichermittel (150) im Regenerationsmodus aufzuladen.

13. Verfahren, umfassend:
Erzeugen von Bilddaten, die mindestens einem Abschnitt eines Fahrers des Motorrads (100) entsprechen;
Bestimmen einer Körperhaltung eines Fahrers eines Motorrads in Abhängigkeit von den Bilddaten (192; 194);
Bestimmen eines Fahrzeugzustands des Motorrads (100);
Bestimmen eines Regenerationssteuersignals (185) in Abhängigkeit von:
der Körperhaltung des Fahrers des Motorrads; und
dem Fahrzeugzustand, wobei der Fahrzeugzustand das Bestimmen einer Bremsfahrereingabe umfasst, die eine Größe des vom Fahrer angeforderten Bremsmoments angibt; und,
Bestimmen des regenerativen Steuersignals (185), das einen Anteil des vom Fahrer angeforderten Bremsmoments als regeneratives Bremsmoment angibt;
Anwenden eines regenerativen Bremsmoments auf mindestens ein Rad (110; 120) des Motorrads in Abhängigkeit von dem Regenerationssteuersignal (185), und
wobei die Körperhaltung eines oder mehreres von Folgendem umfasst:
eine Neigung mindestens eines Abschnitts des Oberkörpers des Fahrers des Motorrads;
eine Verlängerung von mindestens einem Arm des Fahrers des Motorrads; und
eine Schräglage des Fahrers des Motorrads um eine Längsachse des Motorrads (100).

14. Verfahren nach Anspruch 13, umfassend das Erkennen, in Abhängigkeit von den Bilddaten (192; 194), der Körperhaltung des Fahrers des Motorrads als eine aus einer Vielzahl von vorbestimmten Körperhaltungen.

15. Verfahren nach Anspruch 13 oder 14, wobei die Bilddaten (192; 194) von einer oder mehreren Bildgebungsvorrichtungen (191; 193) erzeugt werden, die angeordnet sind, um bei Verwendung mindestens einen Abschnitt des Fahrers des Motorrads zu betrachten.

16. Verfahren nach einem der Ansprüche 13 bis 15, wobei das Regenerationssteuersignal (185) bestimmt wird, um eine Angabe für ein relativ geringeres regeneratives Bremsmoment zu machen, wenn die Körperhaltung des Fahrers des Motorrads angibt, dass ein Oberkörper des Fahrers des Motorrads im Allgemeinen parallel zum Motorrad (100) ist.

17. Verfahren nach einem der Ansprüche 13 bis 16, wobei das Regenerationssteuersignal (185) bestimmt wird, um eine Angabe für ein relativ größeres regeneratives Bremsmoment zu machen, wenn die Körperhaltung des Fahrers des Motorrads angibt, dass ein Oberkörper des Fahrers des Motorrads im Allgemeinen senkrecht zum Motorrad (100) steht.

18. Verfahren nach einem der Ansprüche 13 bis 17, wobei der Zustand des Fahrzeugs Angaben zu einem oder mehreren vom Fahrer des Motorrads betätigten Steuerelementen enthält.

19. Verfahren nach einem der Ansprüche 13 bis 18, wobei das Verfahren das Bestimmen des Regenerationssteuersignals (185) umfasst, das das Verhältnis des vom Fahrer angeforderten Bremsmoments als regeneratives Bremsmoment zum reibungsbasierten Bremsmoment angibt.

20. Verfahren nach einem der Ansprüche 13 bis 19, wobei das Bestimmen des Fahrzeugzustands eines oder mehreres von Folgendem umfasst:
Bestimmen einer Geschwindigkeit des Motorrads (100);
Bestimmen der Schräglage des Motorrads (100); und
Bestimmen einer Beschleunigerfahrereingabe.

21. Computersoftware, umfassend Anweisungen, die, wenn sie von einem Computer ausgeführt werden, angeordnet sind, um ein Verfahren nach einem der Ansprüche 13 bis 20 durchzuführen.

22. Computersoftware nach Anspruch 21, gespeichert auf einem computerlesbaren Medium.

## Revendications

1. Motocyclette (100), comprenant :
une machine électrique (130 ; 140) associée à au moins une roue (110 ; 120) de la motocyclette, dans laquelle ladite machine électrique (130 ; 140) peut fonctionner dans un mode de régénération pour appliquer un couple de freinage régénératif à l'au moins une roue selon un signal de commande de régénération (185) ;
un moyen d'imagerie (191 ; 193) agencé pour délivrer en sortie des données d'image (192 ; 194) correspondant, en cours d'utilisation, à au moins une partie d'un conducteur de la motocyclette ;
un moyen de détermination de posture (190) agencé pour recevoir les données d'image (192 ; 194) et pour déterminer une posture d'un conducteur de la motocyclette en fonction de celle-ci ; et
un moyen de commande de régénération agencé pour déterminer un état de véhicule de la motocyclette (100) et déterminer le signal de commande de régénération (185) en fonction de la posture déterminée du conducteur de la motocyclette et de l'état de véhicule, dans laquelle l'état de véhicule comprend un état d'une commande de freinage indiquant une amplitude du couple de freinage demandé par le conducteur ;
dans laquelle le moyen de commande de régénération est agencé pour déterminer le signal de commande de régénération (185) indiquant une proportion du couple de freinage demandé par le conducteur en tant que couple de freinage régénératif ; et
dans laquelle la posture comprend un ou plusieurs parmi :
une inclinaison d'au moins une partie d'un torse du conducteur de la motocyclette ;
une extension d'au moins un bras ou une jambe du conducteur de la motocyclette ; et
un angle d'inclinaison du conducteur de la motocyclette autour d'un axe longitudinal de la motocyclette (100).

2. Motocyclette selon la revendication 1, dans laquelle le moyen d'imagerie (191 ; 193) comprend un ou plusieurs dispositifs d'imagerie agencés pour, en cours d'utilisation, visualiser l'au moins une partie du conducteur de la motocyclette.

3. Motocyclette selon la revendication 1 ou 2, dans laquelle le moyen de détermination de posture (190) comprend un moyen de reconnaissance d'image agencé pour reconnaître la posture du conducteur de la motocyclette comme faisant partie d'une pluralité de postures prédéterminées.

4. Motocyclette selon l'une quelconque revendication précédente, dans laquelle le moyen de commande de régénération est agencé pour sélectionner une carte de commande pour la machine électrique en fonction de la posture déterminée du conducteur de la motocyclette (100).

5. Motocyclette selon l'une quelconque revendication précédente, dans laquelle le signal de commande de régénération (185) indique le couple de freinage régénératif appliqué à l'au moins une roue (110 ; 120) de la motocyclette par la machine électrique (130 ; 140) dans le mode de régénération.

6. Motocyclette selon l'une quelconque revendication précédente, dans laquelle le moyen de commande de régénération est agencé pour déterminer le signal de commande de régénération (185) indiquant un couple de freinage régénératif relativement plus faible lorsque ladite posture du conducteur de la motocyclette indique qu'un torse supérieur du conducteur de la motocyclette est généralement parallèle à la motocyclette.

7. Motocyclette selon l'une quelconque revendication précédente, dans laquelle le moyen de commande de régénération est agencé pour déterminer le signal de commande de régénération (185) indiquant un couple de freinage régénératif relativement plus important lorsque ladite posture du conducteur de la motocyclette (100) indique qu'un torse supérieur du conducteur de la motocyclette est généralement perpendiculaire à la motocyclette.

8. Motocyclette selon l'une quelconque revendication précédente, dans laquelle l'état de véhicule indique une ou plusieurs commandes actionnées par le conducteur de la motocyclette (100).

9. Motocyclette selon l'une quelconque revendication précédente, dans laquelle le signal de commande de régénération indique la proportion du couple de freinage demandé par le conducteur en tant que couple de freinage régénératif par rapport au couple de freinage basé sur le frottement.

10. Système selon l'une quelconque revendication précédente, dans lequel l'état de véhicule comprend un ou plusieurs parmi :
une vitesse de la motocyclette (100) ;
un angle d'inclinaison de la motocyclette (100) ; et
une entrée de conducteur d'accélérateur.

11. Motocyclette selon l'une quelconque revendication précédente, dans laquelle la machine électrique (130) est associée à une roue avant (110) de la motocyclette.

12. Motocyclette selon l'une quelconque revendication précédente, comprenant un moyen de stockage d'énergie (150), dans laquelle la machine électrique (130 ; 140) est agencée pour délivrer en sortie un courant électrique afin de recharger le moyen de stockage d'énergie (150) dans le mode de régénération.

13. Procédé, comprenant :
la génération de données d'image correspondant à au moins une partie d'un conducteur de la motocyclette (100) ;
la détermination d'une posture d'un conducteur d'une motocyclette en fonction des données d'image (192 ; 194) ;
la détermination d'un état de véhicule de la motocyclette (100) ;
la détermination d'un signal de commande de régénération (185) en fonction de :
la posture du conducteur de la motocyclette ; et
l'état de véhicule, dans lequel l'état de véhicule comprend la détermination d'une entrée de conducteur de frein qui indique une amplitude de couple de freinage demandé par le conducteur ; et,
la détermination du signal de commande régénératif (185) indiquant une proportion du couple de freinage demandé par le passager en tant que couple de freinage régénératif ;
l'application d'un couple de freinage régénératif à au moins une roue (110 ; 120) de la motocyclette en fonction du signal de commande de régénération (185), et
dans lequel la posture comprend un ou plusieurs parmi :
une inclinaison d'au moins une partie d'un torse du conducteur de la motocyclette ;
une extension d'au moins un bras du conducteur de la motocyclette ; et
une inclinaison du conducteur de la motocyclette autour d'un axe longitudinal de la motocyclette (100).

14. Procédé selon la revendication 13 comprenant la reconnaissance, en fonction des données d'image (192 ; 194), de la posture du conducteur de la motocyclette comme faisant partie d'une pluralité de postures prédéterminées.

15. Procédé selon la revendication 13 ou 14, dans lequel les données d'image (192 ; 194) sont générées par un ou plusieurs dispositifs d'imagerie (191 ; 193) agencés pour, en cours d'utilisation, visualiser l'au moins une partie du conducteur de la motocyclette.

16. Procédé selon l'une quelconque des revendications 13 à 15, dans lequel le signal de commande de régénération (185) est déterminé comme indiquant un couple de freinage régénératif relativement plus faible lorsque ladite posture du conducteur de la motocyclette indique qu'un torse supérieur du conducteur de la motocyclette est généralement parallèle à la motocyclette (100).

17. Procédé selon l'une quelconque des revendications 13 à 16, dans lequel le signal de commande de régénération (185) est déterminé comme indiquant un couple de freinage régénératif relativement plus important lorsque ladite posture du conducteur de la motocyclette indique qu'un torse supérieur du conducteur de la motocyclette est généralement perpendiculaire à la motocyclette (100).

18. Procédé selon l'une quelconque des revendications 13 à 17, dans lequel l'état de véhicule indique une ou plusieurs commandes actionnées par le conducteur de la motocyclette.

19. Procédé selon l'une quelconque des revendications 13 à 18, dans lequel le procédé comprend la détermination du signal de commande de régénération (185) indiquant la proportion du couple de freinage demandé par le conducteur en tant que couple de freinage régénératif par rapport au couple de freinage basé sur le frottement.

20. Procédé selon l'une quelconque des revendications 13 à 19, dans lequel la détermination de l'état de véhicule comprend un ou plusieurs parmi :
la détermination d'une vitesse de la motocyclette (100) ;
la détermination d'un angle d'inclinaison de la motocyclette (100) ; et
la détermination d'une entrée de passager d'accélérateur.

21. Logiciel d'ordinateur qui, comprenant des instructions qui, lorsqu'elles sont exécutées par un ordinateur, est agencé pour réaliser un procédé selon l'une quelconque des revendications 13 à 20.

22. Logiciel d'ordinateur selon la revendication 21 stocké sur un support lisible par ordinateur.
